# EUROPEAN PATENT SPECIFICATION

(11) **EP 2 085 849 B1**
(45) Date of publication and mention of the grant of the patent: **12.03.2014**
(21) Application number: 09151025.5
(22) Date of filing: 21.01.2009
(51) Int. Cl.: G05B 19/418

(54) **Method and system for manufacturing an article using portable hand-held tools**
Verfahren und System zur Herstellung eines Artikels mit tragbaren Handwerkzeugen
Procédé et système de fabrication d'un article utilisant des outils portables

(30) Priority: 30.01.2008 US 22230
(43) Date of publication of application: 05.08.2009
(73) Proprietor: Deere & Company, Moline, IL 61265 (US); Iowa State University Research Foundation, Inc., Ames, IA 50011-2131 (US)
(72) Inventor: Meyer, Thomas J., Ankeny, IA 50023 (US); Hilby, Michael J., Johnston, IA 50131 (US); Meyers, Michael J., Bettendorf, IA 52722 (US); Stoytchev, Alexander, Ames, IA 50014 (US); Winer, Eliot, Ames, IA 50010 (US); Martinez, Marisol, Ames, IA 50010 (US); Miller, Matthew A., Ames, IA 50010 (US); Wong, Peter W., Ames, IA 50014 (US); Sinapov, Jivko, Ames, IA 50014 (US)
(74) Representative: Holst, Sönke

(56) References cited:
- WO-A-2006/059927
- US-A1- 2002 032 956
- US-A1- 2002 038 159
- US-A1- 2007 180 674

## Description

The present invention relates to a method and system for manufacturing an article, and, more particularly, to a method and system for avoiding mistakes using portable hand-tools during manufacture an article.

During the manufacture of an article, it is often necessary for a worker to use a hand-held tool to carry out various manufacturing steps, such as assembling, welding, painting, etc. The article may be in the form of an assembly or subassembly such as a transmission, machine frame, operator's cab, electronic packaging, etc.

In the manufacturing environment, a worker using a hand-held tool cannot consistently duplicate exact work from one assembly to another assembly. For example, assembly lines often require many threaded fasteners to be assembled using a torque gun at a single workstation. Known control systems can count the number of times the torque gun reaches the required torque value, but cannot determine if all the fasteners were tightened, or if some were tightened twice, or if the fasteners were tightened in a specific sequence.

US 2002/0038159 A1 describes a processing tool and a processing device for processing a workpiece that is located in a predetermined processing area, at a plurality of processing points. A recognition device recognizes the individual processing points on the workpiece or determines a relative position between the processing tool and the workpiece. The processing points for a respective workpiece are learned in a teach operation and stored in a memory.

US 2002/0032956 A1 describes an assembly system in which targets are provided on the workpiece and identify the positions on which fasteners are to be mounted. The position of the tool is sensed and the fastening torque is monitored.

What is needed in the art is a method and system which not only can determine whether a manufacturing task was carried out at the correct location and/or in the correct sequence, but to identify the particular article which is being manufactured based upon tracking the actual locations and tool activities at each actual location.

This object is achieved with the subject matter of the independent claims. The dependent claims recite advantageous embodiments of the invention.

The invention in one form is directed to a method of manufacturing an article that has multiple defined locations with corresponding tool activities at each defined location, comprising the steps of establishing a defined location for a tool activity to occur; determining an actual location of the tool; comparing said actual location of the tool with said defined location; ascertaining an occurrence of said tool activity at said actual location; verifying whether said tool activity occurred at said defined location; repeating for the remaining defined locations each of said establishing, determining, comparing, ascertaining and verifying steps; storing data for each said defined location, said corresponding actual location, and said corresponding tool activity; tracking said actual locations based upon said stored data and/or said tool activities based upon said stored data; and identifying the article based upon said stored data.

The invention in another form is directed to a system for manufacturing an article having multiple defined locations with corresponding tool activities at each defined location. The system comprises a memory configured for storing the defined locations for a tool activity to occur; a location detector for detecting an actual location of said tool; and an electrical processor in communication with each of said memory and said location detector, said electrical processor configured for comparing said actual location of the tool with said defined location, ascertaining an occurrence of said tool activity at said actual location; and verifying whether said tool activity occurred at said defined location. The memory is configured for storing a plurality of defined locations for respective said tool activities to occur. The location detector is configured for detecting a plurality of actual locations of said tool. The electrical processor is configured for comparing said actual locations of the tool with respective said defined locations, ascertaining an occurrence of said tool activity at each said actual location, and verifying whether each said tool activity occurred at a respective said defined location. The electrical processor is configured for tracking said actual locations based upon said stored data and/or said tool activities based upon said stored data. The electrical processor is configured to identify the article based upon stored data for each said defined location, said corresponding actual location, and said corresponding tool activity.

In the following, the invention will be described in more detail based upon the drawings, in which:
Fig. 1 is a schematic illustration of an embodiment of a system of the present invention for manufacturing an article; and
Fig. 2 is a flowchart of an embodiment of the method of the present invention for manufacturing an article, which may be carried out using the system shown in Fig. 1.

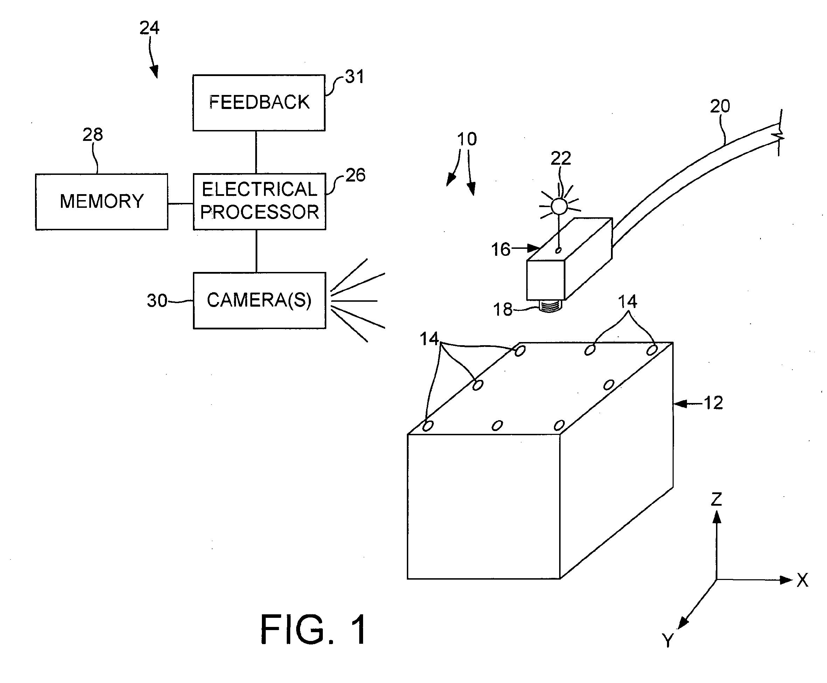

Referring now to the drawings, and more particularly to Fig. 1, there is shown an embodiment of a system 10 for manufacturing an article 12. Article 12 may be any type of manufactured article which is assembled, welded, painted, etc. For example, article 12 could be a transmission, machine frame, etc. For ease of illustration, article 12 is simply shown as a three-dimensional block with dimensions in the X, Y and Z directions. It will be appreciated that the exact size and shape of article 12 may vary.

For a given manufacturing process, article 12 is assumed to have a number of defined locations 14 corresponding to tool activities to be carried out using tool 16. In the embodiment shown in Fig. 1, tool 16 is assumed to be a torque gun, and defined locations 14 are assumed to be the locations of threaded openings in article 12 for receiving threaded fasteners, such as bolts. In the case of a spot welding operation, defined locations 14 could correspond to the spot weld locations. Likewise, in the case of a welding or painting operation requiring movement of a gun, the defined locations 14 could be used to represent the start and/or termination points for a predefined movement of the gun.

As indicated above, tool 16 is assumed to be a torque gun in the embodiment shown in Fig. 1. To that end, although tool 16 is shown in simplified block form, it will be appreciated that the exterior shape would more closely approximate a typical torque gun. Torque gun 16 includes a rotatably driven socket 18, which in turn is engaged with and drives the head of a threaded bolt (not shown) placed in a respective threaded hole at a corresponding defined location 14. Torque gun 16 is coupled with a suitable source of power, such as through an air hose 20 connected to a remote air supply (not shown). It will be appreciated that torque gun 16 could be electrically driven, in which case reference number 20 would correspond to an electrical cable coupled with an electrical power supply.

Tool 16 could also take the form of other types of portable hand-held tools, such as a torque wrench, weld gun, paint gun, pulse gun, air tool or banding tool.

Tool 16 also includes one or more optical targets 22 which are placed at corresponding exterior locations. In the embodiment shown, tool 16 includes a single optical target in the form of an active target which emanates a particular type of light. Rather than being an active target requiring a source of electrical power (e.g., battery power), it is also possible that target 22 could be a passive target such as a number of reflective balls, a reflective strip, a projection with a predefined shape, etc.

An electrical circuit 24 includes an electrical processor 26, memory 28, one or more cameras 30, and feedback 31. Electrical processor 26 preferably is a microprocessor which is coupled with each of memory 28 and camera(s) 30. Electrical processor 26 is hardwired with each of memory 28 and camera 30 in the illustrated embodiment, but could also be coupled via wireless connections, etc.

Memory 28 is any suitable type of memory capable of long term storage of data which is provided to electrical processor 26. For example, memory 28 can be used to store the coordinates of defined locations 14 on article 12.

Camera 30 is used to detect the actual location of optical target 22 on tool 16, and provides corresponding output signals to electrical processor 26. In the embodiment shown, camera 30 is assumed to be an infrared (IR) camera which detects light which is transmitted from optical target 22. Preferably multiple cameras are used at different locations associate with the work station at which article 12 is located so that optical target 22 may be more accurately located relative to a known coordinate.

Feedback 31 is a schematic representation of some type of feedback which is provided to an operator or assembler during the manufacturing process, discussed in more detail below.

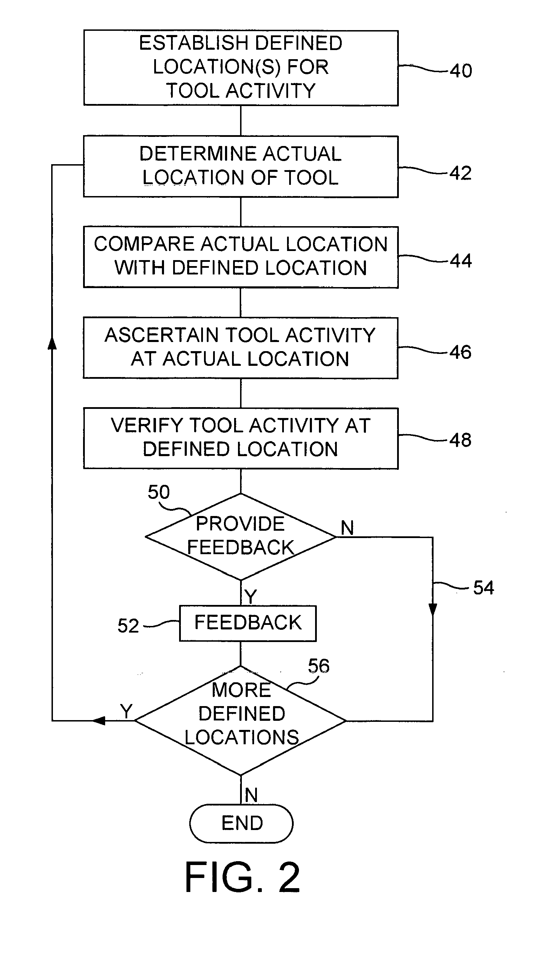

Referring now to Fig. 2, an embodiment of the method of the present invention for manufacturing an article will be described in greater detail. Initially, the one or more defined locations for carrying out a tool activity are established using data stored in memory 28 (block 40). If article 12 is accurately placed at a known position and orientation within the work station, then it is possible that the defined locations could simply be three-dimensional, absolute coordinates relative to a known coordinate. Alternatively, it is possible to establish the defined locations 14 relative to a three-dimensional model of article 12 within the work station. This approach may allow a more dynamic referencing of the defined locations 14 for a given tool activity relative to the size, shape, exact position and orientation of article 12 within the work station. (i.e., more of a relative rather than absolute determination of defined locations 14 on article 12).

In the embodiment shown, a three-dimensional representation of article 12 is generated and stored within a computer aided drafting (CAD) library within memory 28. Each defined location 14 is correlated to a corresponding point on the three-dimensional representation of article 12. The three-dimensional coordinate of each correlated point is likewise stored in memory 28. Additionally, a defined tool activity is assigned for each correlated point on the three-dimensional representation of article 12. The assigned tool activities for each correlated point are likewise stored in memory 28. Thus, the defined locations 14 in essence overlie the three-dimensional representation of article 12, and each defined location has a corresponding defined tool activity.

Rather than using a CAD library or numerical analysis technique to establish the defined locations 14 for a tool activity, it is also possible to empirically establish the defined locations 14. In particular, the position(s) of tool 16 may be tracked during an initial data gathering stage and correlated with the occurrence of tool activities to establish the defined locations 14 which are stored within memory 28. In the case of a moving tool activity such as welding or painting, a set of detected defined locations 14 can be used to define the tool activity.

Electrical processor 26 uses the output signals from camera 30 to determine the actual location of tool 16 (block 42). The actual location is compared with a corresponding defined location for a given tool activity (block 44). Electrical processor 26 then ascertains whether the prescribed tool activity occurred at the actual location (block 46). For example, in the case of a torque gun, it is possible to sense whether the torque which is applied to the head of the bolt reaches a predefined torque value. This information can be sent via a wired or wireless connection to electrical processor 26. The prescribed tool activity must occur, and the actual location must match with the defined location, in order for the tool activity to be verified (block 48).

At decision block 50, a determination is made as to whether an operator is to be provided with feedback in the event that the manufacturing process is not proceeding as expected. More particularly, if the tool activity does not correspond to the prescribed tool activity, and the actual location does not match with the defined location, then an operator is provided with feedback (block 52). For example, electrical processor 26 can control the manufacturing process to shut off tool 16, not allow article 12 to advance to a next workstation, trigger a warning light observable by the operator and/or generate a written report. The feedback can be positive or negative. For instance, a monitor can be placed in front of an operator with a model of the assembly that has components turning a different color when the activity is completed on that component. This gives the operator visual feedback on what is left to complete, or shows what is next in the sequence if a sequence is required. Other types of feedback are of course also possible.

On the other hand, if the tool activity does correspond to the expected tool activity, and the actual location matches with the defined location, then there is no need to provide feedback to an operator (line 54).

At decision block 56, a determination is made as to whether tool 16 should be moved to additional defined locations 14 for further tool activities. If so, then control loops to block 42 and the control logic repeats. On the other hand, if there is only a single defined location for a tool activity, or tool 16 is at the defined location corresponding to a last tool activity, then the control logic simply ends.

For an article having multiple defined locations with corresponding tool activities at each defined location, it is possible to track the actual locations and/or tool activities at each actual location for various purposes. For example, one purpose for tracking the actual locations and tool activities at each actual location is to identify the particular article 12 which is being manufactured. This allows electrical processor 26 to know the sequence of the remaining defined locations and corresponding tool activities which are to occur after the article 12 is identified. If an operator does not perform a next expected tool activity for a given article 12, then feedback may be provided to the operator at block 52.

From the foregoing description, it is apparent that the method and system of the present invention dynamically avoids mistakes during the manufacturing process by tracking the position and operation of tool 16 relative to a predetermined or dynamically identified article 12.

In the system 10 for manufacturing an article described above, a location detector detects the position of tool 16 using camera 30 and optical target 22. Optical target 22 thus in essence is a passive component, the position of which is sensed using one or more cameras 30. Cameras 30 are therefore the active components providing output signals to electrical processor 26. It is also possible to configure system 10 with a location detector having an active component on tool 16 which provides an output signal to electrical processor 26 to determine the actual location of tool 16. For example, tool 16 may include a location detector in the form of an active sensor which senses its position relative to a fixed coordinate and transmits a wireless signal to electrical processor 26.

## Claims

1. A method of manufacturing an article (12) that has multiple defined locations (14) with corresponding tool activities at each defined location (14), comprising the steps of:
establishing a defined location (14) for a tool activity to occur;
determining an actual location of the tool (16);
comparing said actual location of the tool (16) with said defined location (14);
ascertaining an occurrence of said tool (16) activity at said actual location;
verifying whether said tool activity occurred at said defined location;
repeating for at least one other of the defined locations (14) each of said establishing, determining, comparing, ascertaining and verifying steps;
storing data for each said defined location (14), said corresponding actual location, and said corresponding tool activity;
tracking said actual locations (14) based upon said stored data and/or said tool activities based upon said stored data;
and identifying the article (12) based upon said stored data.

2. The method of manufacturing an article of claim 1, including the step of correlating each said defined location to a point on the identified article (12).

3. The method of manufacturing an article of claim 1, wherein said defined locations are established using one of a CAD model, a numerical analysis technique, and an empirical analysis.

4. The method of manufacturing an article of claim 1, including the steps of:
generating a 3-dimensional representation of the article (12) to be assembled;
correlating each said defined location to a point on said 3-dimensional representation;
assigning a defined tool activity to each correlated point on said 3-dimensional representation; and
comparing each said defined tool activity at each correlated point with said tool activity at said actual location.

5. The method of manufacturing an article of claim 1, including the step of providing feedback to an operator dependent upon said steps of verifying whether said tool activities occurred at said corresponding defined locations.

6. The method of manufacturing an article of claim 5, wherein said feedback includes one of:
shutting off the tool;
not allowing the article to advance to a next work station;
triggering a warning light; and
generating a report.

7. The method of manufacturing an article of claim 1, wherein said step of determining an actual location of the tool (16) is carried out using an optical target (22) on the tool (16) and at least one camera (30), said at least one camera (30) determining a location of the optical target (22) relative to a known coordinate.

8. The method of manufacturing an article of claim 7, wherein said optical target (22) is one of an active target and an inactive target.

9. The method of manufacturing an article of claim 1, wherein said tool (16) is a hand-held portable tool, for example at least one of a torque gun, a torque wrench, a weld gun, a paint gun, a pulse gun, an air tool, and a banding tool.

10. The method of manufacturing an article of claim 1, including the step of providing feedback to an operator dependent upon said step of verifying whether said tool activity occurred at said defined location, wherein said feedback preferably includes one of:
shutting off the tool;
not allowing the article to advance to a next work station;
triggering a warning light;
displaying completed work on a model; and
generating a report.

11. A system (10) for manufacturing an article (12), the article (12) having multiple defined locations (14) with corresponding tool activities at each defined location (14), the system (10) comprising:
a memory (28) configured for storing the defined locations (14) for the tool activities to occur;
a location detector for detecting an actual location of said tool (16); and
an electrical processor (26) in communication with each of said memory (28) and said location detector, said electrical processor (26) being configured for comparing said actual location of the tool (16) with said defined location (14), ascertaining an occurrence of said tool activity at said actual location; and verifying whether said tool activity occurred at said defined location,
said location detector is configured for detecting a plurality of actual locations of said tool (16); and
said electrical processor (26) is configured for comparing said actual locations of the tool (16) with respective said defined locations (14), ascertaining an occurrence of said tool activity at each said actual location, and verifying whether each said tool activity occurred at a respective said defined location,
said electrical processor (26) is configured for tracking said actual locations (14) based upon said stored data and/or said tool activities based upon said stored data;
wherein said electrical processor (26) is configured to identify the article (12) based upon stored data for each said defined location (14), said corresponding actual location, and said corresponding tool activity.

## Patentansprüche

1. Verfahren zum Herstellen eines Artikels (12), der mehrere definierte Stellen mit entsprechenden Werkzeugaktivitäten an jeder definierten Stelle (14) besitzt, das die folgenden Schritte umfasst:
Bilden einer definierten Stelle (14) für eine Werkzeugaktivität, die stattfinden soll;
Bestimmen einer tatsächlichen Stelle des Werkzeugs (16);
Vergleichen der tatsächlichen Stelle des Werkzeugs (16) mit der definierten Stelle (14);
Sicherstellen, dass die Aktivität des Werkzeugs (16) an der tatsächlichen Stelle stattfindet;
Verifizieren, ob die Werkzeugaktivität an der definierten Stelle stattfand;
Wiederholen des Bildungsschrittes, des Bestimmungsschrittes, der Vergleichsschrittes, des Sicherstellungsschrittes und des Verifizierungsschrittes für wenigstens eine andere der definierten Stellen (14);
Speichern von Daten für jede definierte Stelle (14), die entsprechende tatsächliche Stelle und die entsprechende Werkzeugaktivität;
Verfolgen der tatsächlichen Stellen (14) anhand der gespeicherten Daten und/oder der Werkzeugaktivitäten anhand der gespeicherten Daten;
und Identifizieren des Artikels (12) anhand der gespeicherten Daten.

2. Verfahren zum Herstellen eines Artikels nach Anspruch 1, das den Schritt des Korrelierens jeder definierten Stelle mit einem Punkt auf dem identifizierten Artikel (12) umfasst.

3. Verfahren zum Herstellen eines Artikels nach Anspruch 1, wobei die definierten Stellen unter Verwendung eines CAD-Modells oder einer Technik der numerischen Analyse oder einer empirischen Analyse gebildet werden.

4. Verfahren zum Herstellen eines Artikels nach Anspruch 1, das die folgenden Schritte umfasst:
Erzeugen einer dreidimensionalen Darstellung des zusammenzufügenden Artikels (12);
Korrelieren jeder definierten Stelle mit einem Punkt auf der dreidimensionalen Darstellung;
Zuweisen einer definierten Werkzeugaktivität zu jedem korrelierten Punkt auf der dreidimensionalen Darstellung; und
Vergleichen jeder definierten Werkzeugaktivität an jedem korrelierten Punkt mit der Werkzeugaktivität an der tatsächlichen Stelle.

5. Verfahren zum Herstellen eines Artikels nach Anspruch 1, das den Schritt des Bereitstellens einer Rückmeldung an einen Bediener in Abhängigkeit von den Schritten des Verifizierens, ob die Werkzeugaktivitäten an den entsprechenden definierten Stellen stattfanden, umfasst.

6. Verfahren zum Herstellen eines Artikels nach Anspruch 5, wobei die Rückmeldung eines der Folgenden enthält:
Abschalten des Werkzeugs;
nicht Zulassen, dass der Artikel zu einer nächsten Arbeitsstation weiterbewegt wird;
Einschalten eines Warnlichts; und
Erstellen eines Berichts.

7. Verfahren zum Herstellen eines Artikels nach Anspruch 1, wobei der Schritt des Bestimmens einer tatsächlichen Stelle des Werkzeugs (16) unter Verwendung eines optischen Ziels (22) an dem Werkzeug (16) und wenigstens einer Kamera (30) ausgeführt wird, wobei die wenigstens eine Kamera (30) eine Stelle des optischen Ziels (22) relativ zu einer bekannten Koordinate bestimmt.

8. Verfahren zum Herstellen eines Artikels nach Anspruch 7, wobei das optische Ziel (22) ein aktives Ziel oder ein inaktives Ziel ist.

9. Verfahren zum Herstellen eines Artikels nach Anspruch 1, wobei das Werkzeug (16) ein mit der Hand gehaltenes, tragbares Werkzeug, beispielsweise eine Drehmomentkanone und/oder ein Drehmomentschlüssel und/oder eine Schweißkanone und/oder eine Farbkanone und/oder eine Impulskanone und/oder ein Druckluftwerkzeug und/oder ein Banderolierwerkzeug ist.

10. Verfahren zum Herstellen eines Artikels nach Anspruch 1, das den Schritt des Bereitstellens einer Rückmeldung an einen Bediener in Abhängigkeit von dem Schritt des Verifizierens, ob die Werkzeugaktivität an der definierten Stelle stattfand, umfasst, wobei die Rückmeldung vorzugsweise eines der Folgenden enthält:
Abschalten des Werkzeugs;
nicht Zulassen, dass der Artikel an eine nächste Arbeitsstation vorwärts bewegt wird;
Einschalten eines Warnlichts;
Anzeigen der abgeschlossenen Arbeit an einem Modell; und
Erstellen eines Berichts.

11. System (10) zum Herstellen eines Artikels (12), wobei der Artikel (12) mehrere definierte Stellen (14) mit entsprechenden Werkzeugaktivitäten an jeder definierten Stelle (14) besitzt, wobei das System (10) Folgendes umfasst:
einen Speicher (28), der konfiguriert ist, die definierten Stellen (14) für die Werkzeugaktivitäten, die stattfinden sollen, zu speichern;
einen Stellendetektor, um eine tatsächliche Stelle des Werkzeugs (16) zu detektieren; und
einen elektrischen Prozessor (26) in Kommunikation mit dem Speicher (28) und dem Stellendetektor, wobei der elektrische Prozessor (26) konfiguriert ist, die tatsächliche Stelle des Werkzeugs (16) mit der definierten Stelle (14) zu vergleichen, ein Stattfinden der Werkzeugaktivität an der tatsächlichen Stelle sicherzustellen; und zu verifizieren, ob die Werkzeugaktivität an der definierten Stelle stattfand,
wobei der Stellendetektor konfiguriert ist, mehrere tatsächliche Stellen des Werkzeugs (16) zu detektieren; und
der elektrische Prozessor (26) konfiguriert ist, die tatsächlichen Stellen des Werkzeugs (16) mit entsprechenden definierten Stellen (14) zu vergleichen, ein Stattfinden der Werkzeugaktivität an jeder tatsächlichen Stelle sicherzustellen und zu verifizieren, ob jede Werkzeugaktivität an einer entsprechenden definierten Stelle stattfand,
wobei der elektrische Prozessor (26) konfiguriert ist, die tatsächlichen Stellen (14) anhand der gespeicherten Daten und/oder die Werkzeugaktivitäten anhand der gespeicherten Daten zu verfolgen;
wobei der elektrische Prozessor (26) konfiguriert ist, den Artikel (12) anhand der gespeicherten Daten für jede definierte Stelle (14), der entsprechenden tatsächlichen Stelle und der entsprechenden Werkzeugaktivität zu identifizieren.

## Revendications

1. Procédé de fabrication d'un article (12) comportant de multiples emplacements définis (14) avec des activités d'outil correspondantes à chaque emplacement défini (14), le procédé comprenant les étapes consistant à :
établir un emplacement défini (14) pour une mise en oeuvre d'une activité d'outil ;
déterminer un emplacement effectif de l'outil (16) ;
comparer ledit emplacement effectif de l'outil (16) audit emplacement défini (14) ;
s'assurer d'une mise en oeuvre de ladite activité d'outil (16) audit emplacement effectif ;
vérifier si ladite activité d'outil a été mise en oeuvre audit emplacement défini ;
répéter, pour au moins un autre des emplacements définis (14), chacune desdites étapes consistant à établir, déterminer, comparer, s'assurer et vérifier ;
stocker des données associées à chaque dit emplacement défini (14), audit emplacement effectif correspondant et à ladite activité d'outil correspondante ;
effectuer un suivi desdits emplacements effectifs (14) sur la base desdites données stockées et/ou desdites activités d'outil sur la base desdites données stockées ; et
identifier l'article (12) sur la base desdites données stockées.

2. Procédé de fabrication d'un article selon la revendication 1, comportant l'étape consistant à corréler ledit emplacement défini à un point sur l'article (12) identifié.

3. Procédé de fabrication d'un article selon la revendication 1, dans lequel lesdits emplacements définis sont établis par l'un des moyens suivants : un modèle de CAO, une technique d'analyse numérique et une analyse empirique.

4. Procédé de fabrication d'un article selon la revendication 1, comportant les étapes consistant à :
générer une représentation tridimensionnelle de l'article (12) à assembler ;
corréler chaque dit emplacement défini à un point sur ladite représentation tridimensionnelle ;
affecter une activité d'outil définie à chaque point corrélé sur ladite représentation tridimensionnelle ; et
comparer chaque dite activité d'outil définie à chaque point corrélé à ladite activité d'outil audit emplacement effectif.

5. Procédé de fabrication d'un article selon la revendication 1, comportant l'étape consistant à fournir un retour d'information à un opérateur en fonction desdites étapes consistant à vérifier si lesdites activités d'outil ont été mises en oeuvre auxdits emplacements définis correspondants.

6. Procédé de fabrication d'un article selon la revendication 5, dans lequel ledit retour d'information comprend l'une des actions consistant à :
arrêter l'outil ;
bloquer le transfert de l'article vers un poste de travail suivant ;
déclencher un avertisseur lumineux ;
générer un rapport.

7. Procédé de fabrication d'un article selon la revendication 1, dans lequel ladite étape consistant à déterminer un emplacement effectif de l'outil (16) est réalisée à l'aide d'une cible optique (22) sur l'outil (16) et d'au moins une caméra (30), ladite au moins une caméra (30) déterminant un emplacement de la cible optique (22) relativement à une coordonnée connue.

8. Procédé de fabrication d'un article selon la revendication 7, dans lequel ladite cible optique (22) est une cible active ou une cible inactive.

9. Procédé de fabrication d'un article selon la revendication 1, dans lequel ledit outil (16) est un outil à main portatif, notamment au moins un des outils suivants : une clé dynamométrique pneumatique, une clé dynamométrique, un pistolet de soudage, un pistolet à peinture, un pistolet à impulsions, un outil pneumatique et un outil de cerclage.

10. Procédé de fabrication d'un article selon la revendication 1, comportant l'étape consistant à fournir un retour d'information à un opérateur en fonction de ladite étape consistant à vérifier si ladite activité d'outil a été mise en oeuvre audit emplacement défini, ledit retour d'information comprenant de préférence l'une des actions consistant à :
arrêter l'outil ;
bloquer le transfert de l'article vers un poste de travail suivant ;
déclencher un avertisseur lumineux ;
afficher un travail achevé sur un modèle ; et
générer un rapport.

11. Système (10) pour fabriquer un article (12), l'article (12) comportant de multiples emplacements définis (14) avec des activités d'outil correspondantes à chaque emplacement défini (14), le système (10) comprenant :
une mémoire (28) configurée pour stocker les emplacements définis (14) pour une mise en oeuvre des activités d'outil ;
un détecteur d'emplacement pour détecter un emplacement effectif dudit outil (16) ; et
un processeur électrique (26) en communication avec ladite mémoire (28) et ledit détecteur d'emplacement, ledit processeur électrique (26) étant configuré pour comparer ledit emplacement effectif de l'outil (16) audit emplacement défini (14), s'assurer d'une mise en oeuvre de ladite activité d'outil audit emplacement effectif ; et vérifier si ladite activité d'outil a été mise en oeuvre audit emplacement défini ;
ledit détecteur d'emplacement étant configuré pour détecter une pluralité d'emplacements effectifs dudit outil (16) ; et
ledit processeur électrique (26) étant configuré pour comparer lesdits emplacements effectifs de l'outil (16) à desdits emplacements définis respectifs (14), s'assurer d'une mise en oeuvre de ladite activité d'outil à chaque dit emplacement effectif, et vérifier si chaque dite activité d'outil a été mise en oeuvre à un dit emplacement défini respectif,
ledit processeur électrique (26) étant configuré pour effectuer un suivi desdits emplacements effectifs (14) sur la base desdites données stockées et/ou desdites activités d'outil sur la base desdites données stockées ;
ledit processeur électrique (26) étant configuré pour identifier l'article (12) sur la base de données stockées associées à chaque dit emplacement défini (14), audit emplacement effectif correspondant et à ladite activité d'outil correspondante.
